**Europäisches Patentamt**

**European Patent Office**

**Office européen des brevets**

(11) Veröffentlichungsnummer : **0 092 749**
**B1**

# EUROPÄISCHE PATENTSCHRIFT

(45) Veröffentlichungstag der Patentschrift :
21.01.87

(21) Anmeldenummer : 83103677.7

(22) Anmeldetag : 15.04.83

(51) Int. Cl.⁴ : **B 65 C 9/40**, B 65 C 9/02,
B 65 G 43/08, B 23 Q 7/14

(54) Einrichtung zum Prüfen und Nachbearbeiten von Gegenständen.

(30) Priorität : 22.04.82 DE 3215297

(43) Veröffentlichungstag der Anmeldung :
02.11.83 Patentblatt 83/44

(45) Bekanntmachung des Hinweises auf die Patenterteilung : 21.01.87 Patentblatt 87/04

(84) Benannte Vertragsstaaten :
CH DE FR GB IT LI NL

(56) Entgegenhaltungen :
DE-A- 2 435 567
DE-A- 3 132 816
GB-A- 1 416 177
US-A- 3 613 885

(73) Patentinhaber : **Bausch + Ströbel Maschinenfabrik
GmbH & Co
Postfach 20
D-7174 Ilshofen (DE)**

(72) Erfinder : **Bullinger, Siegfried
Kürzstrasse 29
D-7174 Ilshofen (DE)**
Erfinder : **Busch, Walter
Gartenstrasse 18
D-7189 Frankenhardt-Gründelhardt (DE)**
Erfinder : **Sperrle, Willi
Wolfsgasse 63
D-7181 Satteldorf (DE)**

(74) Vertreter : **Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)**

## Beschreibung

Die Erfindung betrifft eine Einrichtung zum Prüfen und Nachbearbeiten von in einer Bearbeitungsstation bearbeiteten Gegenständen, mit einer mehrere der Gegenstände in einer Reihe geordnet und in Aufnahmen haltend nacheinander durch die Bearbeitungsstation bewegenden Transporteinrichtung, einer die Gegenstände nacheinander einzeln der Transporteinrichtung zuführenden, steuerbaren Beschickungseinrichtung, einer die Gegenstände von der Transporteinrichtung abführenden Abtransporteinrichtung und einer Steuerung, die bei Ermittlung eines unzureichend bearbeiteten Gegenstands die Beschickungseinrichtung zumindest für die Dauer eines Bearbeitungstakts der Bearbeitungsstation anhält und den unzureichend bearbeiteten Gegenstand mittels der Transporteinrichtung erneut der Bearbeitungsstation zuführt.

Bei einer nach diesem Prinzip arbeitenden, bekannten Etikettiereinrichtung werden die zu etikettiernden Gegenstände, beispielsweise Ampullen oder sonstige Behälter von einer Einlaufschnecke auf einen um eine vertikale Achse schrittweise drehenden Teller überführt. Der Teller trägt auf seinem Umfang im Abstand voneinander Aufnahmen für die Ampullen und bewegt die in den Aufnahmen gehaltenen Ampullen in einer im Bearbeitungstakt intermittierenden Bewegung an einem Etiketten-Spendegerät vorbei. In Bewegungsrichtung um den Abstand mehrerer Aufnahmen versetzt überprüft eine optische Prüfvorrichtung Lage und Vorhandensein der Etiketten. In Drehrichtung des Tellers der Prüfvorrichtung nachfolgend übernimmt eine Auslaufschnecke die etikettierten Ampullen von dem Teller.

Die Ampullen werden mittels eines im Bewegungstakt des Tellers arbeitenden Ausschubhebels aus den Aufnahmen des Tellers in den Einlaufweg der Auslaufschnecke eingeschoben. Stellt die Prüfeinrichtung eine nicht etikettierte Ampulle fest, so wird der Ausschubhebel beim Vorbeilaufen dieser Ampulle gestoppt. Die nicht etikettierte Ampulle verbleibt auf dem Teller und wird an der Einlaufschnecke vorbei nach einer vollen Umdrehung des Tellers erneut der Etiketten-Spendevorrichtung zugeführt. Die Einlaufschnecke wird, während die nicht etikettierte Ampulle vorbeibewegt wird, angehalten.

Aufgrund der intermittierenden Bewegung des Tellers sind die Ampullen hohen Beschleunigungskräften ausgesetzt. Der Teller wird über die Hälfte jedes Arbeitstakts angehalten und über die andere Hälfte bewegt. Trotzdem die tatsächliche Bewegungsgeschwindigkeit der Ampullen hoch ist, bleibt die Arbeitstaktfrequenz vergleichsweise niedrig. Die Arbeitstaktfrequenz wird darüber hinaus durch den die Ampullen radial zum Teller ausschiebenden Ausschubhebel begrenzt. Der Ausschubhebel muß in der Lage sein, innerhalb eines Arbeitstakts sowohl eine Ampulle aus der zugehörigen Aufnahme des Tellers auszuschieben als auch der Bewegungsbahn einer nicht etikettierten Ampulle auszuweichen. Bei hohen Arbeitstaktfrequenzen übt der Ausschubhebel hohe Beschleunigungskräfte auf die Ampullen aus.

Aufgabe der Erfindung ist es, einen Weg zu zeigen, wie die Arbeitstaktfrequenz der eingangs erläuterten Einrichtung auf konstruktiv einfache Weise erhöht werden kann.

Diese Aufgabe wird erfindungsgemäß dadurch gelöst, daß die Transporteinrichtung so ausgebildet ist, daß ihre Transportrichtung umkehrbar ist und sie die Gegenstände in einer kontinuierlichen, gleichförmigen Bewegung von der Beschickungseinrichtung über die Bearbeitungsstation zur Abtransporteinrichtung bewegt, und daß die Steuerung bei Ermittlung eines unzureichend bearbeiteten Gegenstands die Beschickungseinrichtung anhält und zugleich oder später die Transporteinrichtung anhält und deren Transportrichtung umkehrt, bis der unzureichend bearbeitete Gegenstand zumindest die Bearbeitungsstation erreicht hat, dann die Transportrichtung erneut umkehrt und zugleich oder später die Beschickungseinrichtung einschaltet.

Da die Transporteinrichtung kontinuierlich arbeitet, wird die Bearbeitungsrate nicht durch intermittierendes Beschleunigen bzw. Abbremsen verringert bzw. begrenzt.

In einer ersten Ausgestaltung der Erfindung überprüft die Prüfstation das Bearbeitungsergebnis für jeden Gegenstand während der Bearbeitung dieses Gegenstands in der Bearbeitungsstation. Bei Ermittlung eines unzureichend bearbeiteten Gegenstands hält die Steuerung zuerst die Beschickungseinrichtung an, bevor sie die Transporteinrichtung anhält und deren Transportrichtung umkehrt, bis der unzureichend bearbeitete Gegenstand die Bearbeitungsstation für die Nachbearbeitung erreicht hat. Nachdem das Bearbeitungsergebnis bereits bei Abschluß jedes Bearbeitungsvorganges zur Verfügung steht, kann die Beschickungseinrichtung bereits unmittelbar nach Abschluß des Bearbeitungsvorganges angehalten werden. Für das Abbremsen der insbesondere mit hoher Geschwindigkeit arbeitenden Transporteinrichtung steht somit nahezu ein vollständiger Bearbeitungstakt zur Verfügung. Die Transporteinrichtung kann damit sanft abgebremst werden. Der Rücklauf der Transporteinrichtung führt den unzureichend bearbeiteten Gegenstand über den Abbremsweg in die Bearbeitungsstation zurück. Die Abtransporteinrichtung kann während der Nachbearbeitungsphase kontinuierlich weiterarbeiten. Insbesondere sind keine gesondert zu steuernden, beweglichen Auswerfhebel oder dergleichen erforderlich. Die Transporteinrichtung und die Beschickungseinrichtung arbeiten vorzugsweise in gerader Reihe hintereinander. Zweckmäßigerweise transportiert die Beschickungseinrichtung lediglich einige wenige zu bearbeitende Gegenstände, so daß sie bei Beginn der Nachbearbeitungsphase rasch abgebremst werden kann.

Eine zweite Ausgestaltung der Erfindung erlaubt es der Steuerung, die Beschickungseinrichtung und die Transporteinrichtung gleichzeitig anzuhalten. Die Transporteinrichtung ist so ausgebildet, daß in Aufnahmen der Transporteinrichtung sich befindende Gegenstände in umgekehrter Transportrichtung am Beschickungsort der Beschickungseinrichtung vorbeitransportiert werden können, wenn unzureichend bearbeitete Gegenstände in die Bearbeitungsstation zurücktransportiert werden. Am Beschickungsort bewegen sich die Aufnahmen der Transporteinrichtung quer zur Beschickungsrichtung der Beschickungseinrichtung. Bei normaler Transportrichtung bewegen sich die Aufnahmen der Transporteinrichtung vor Erreichen des Beschickungsorts durch einen « Pufferbereich », in den sich die zu bearbeitenden Gegenstände bei umgekehrter Transportrichtung am Beschickungsort vorbei wieder hineinbewegen können. Dieser Pufferbereich erlaubt auch Konstruktionen, bei welchen die Prüfeinrichtung das Bearbeitungsergebnis nicht am Ort der Bearbeitungseinrichtung, sondern, gesehen in Transportrichtung, im Abstand davon überprüft.

Auch bei dieser Einrichtung kann die kontinuierlich sich bewegende Transporteinrichtung sanft abgebremst werden, wobei aufgrund des Pufferraums gegebenenfalls auch mehr als ein Bearbeitungstakt ausgenutzt werden kann. Darüber hinaus kann auch die Beschickungseinrichtung sanft angehalten werden, wobei beim Abbremsen gegebenenfalls noch ein oder mehrere zu bearbeitende Gegenstände in Aufnahmen der im Abbremsbetrieb betriebenen Transporteinrichtung eingeführt werden. Zweckmäßigerweise wird die Beschickungseinrichtung so gesteuert, daß nach Ermittlung eines unzureichend bearbeiteten Gegenstandes die Beschickungseinrichtung abgebremst wird, während sie den nächsten Gegenstand in die zugehörige Aufnahme der Transporteinrichtung einbringt und unmittelbar danach stillgesetzt wird.

Um die Umkehrbewegung der Transporteinrichtung beim Zurückholen des unzureichend bearbeiteten Gegenstandes in die Bearbeitungsstation möglichst kurz zu halten, überprüft die Prüfstation das Bearbeitungsergebnis für jeden Gegenstand bevorzugt auch hier während der Bearbeitung dieses Gegenstandes in der Bearbeitungsstation, das heißt während desselben Bearbeitungstakts.

In bevorzugten Ausführungsformen wird die Transporteinrichtung und/oder die Beschickungseinrichtung von einem elektrischen Schrittmotor angetrieben, zweckmäßigerweise durch gesonderte Schrittmotoren. Derartige Schrittmotore werden durch Treiberimpulse um jeweils einen vorbestimmten Drehwinkel pro Impuls gedreht. Durch Ändern der Impulsrate kann die Antriebsgeschwindigkeit und gegebenenfalls der Beschleunigungs- bzw. Abbremsvorgang gesteuert werden. Durch Abzählen der Impulse läßt sich die Distanz, über die die Beschickungseinrichtung bzw. die Transporteinrichtung die Gegenstände bewegt, exakt steuern. Anstelle eines Schrittmotors können auch andere Elektromotore benutzt werden, insbesondere Gleichstrommotore mit Permanentmagnetstator oder Scheibenläufermotore, die vorzugsweise an einen Drehzahlregelkreis mit einem die tatsächliche Motordrehzahl überwachenden Tachometer angeschlossen sind.

Bei der Bearbeitungsstation handelt es sich bevorzugt um eine Etikettiervorrichtung zum Aufbringen von Haftetiketten auf die mittels der Transporteinrichtung zugeführten Gegenstände, insbesondere Behälter, Ampullen, Spritzen od. dgl. Andere Einsatzgebiete sind beispielsweise das Waschen, Füllen, Verschließen oder Bedrucken von Behältern und dgl.

Im folgenden sollen Ausführungsbeispiele der Erfindung anhand von Zeichnungen näher erläutert werden. Es zeigt

Figuren 1a bis d eine Bearbeitungseinrichtung mit einer in ihrer Transportrichtung von einer Beschickungseinrichtung mit den zu bearbeitenden Gegenständen beschickten Transporteinrichtung in aufeinanderfolgenden Nachbearbeitungsphasen ;

Figuren 2a bis d eine Bearbeitungseinrichtung mit einer quer zu ihrer Transportrichtung von einer Beschickungseinrichtung mit den zu bearbeitenden Gegenständen beschickten Transporteinrichtung in aufeinanderfolgenden Nachbearbeitungsphasen und

Figur 3 eine schematische Draufsicht auf eine Etikettiervorrichtung.

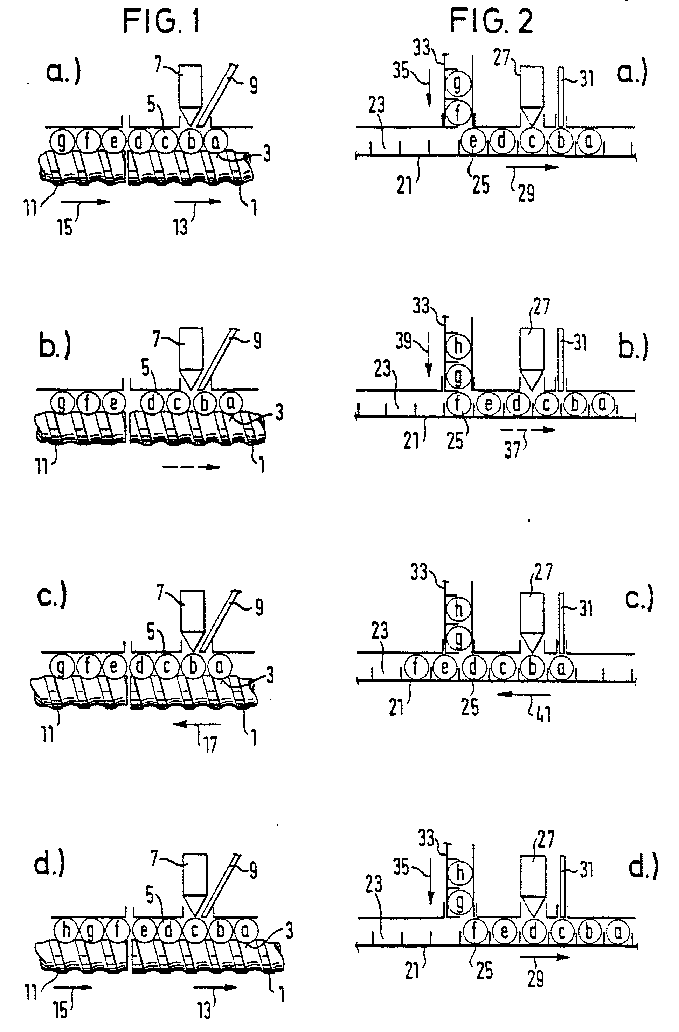

Fig. 1 zeigt eine kontinuierlich und gleichförmig angetriebene Transporteinrichtung 1, beispielsweise eine Transportschnecke, die in Aufnahmen 3 ihrer Schneckengänge Gegenstände 5, beispielsweise Flaschen, Ampullen oder Spritzen, insbesondere aus Glas, an einer Bearbeitungsstation 7, beispielsweise einer Etikettiereinrichtung für die Bearbeitung vorbeibewegt. Eine Prüfeinrichtung 9 überprüft das Bearbeitungsergebnis und gibt vor Beginn des nächsten Bearbeitungstakts ein Fehlersignal ab, wenn der Gegenstand 5 unzureichend bearbeitet wurde. Die zu bearbeitenden Gegenstände werden der Transporteinrichtung 1 von einer Beschickungseinrichtung 11, hier ebenfalls einer Transportschnecke in Transportrichtung der Transporteinrichtung 1 zugeführt. Die Transporteinrichtung bewegt die zur Kennzeichnung der zeitlichen Reihenfolge mit wachsenden Buchstaben des Alphabets bezeichneten Gegenstände in Richtung eines Pfeils 13 an der Bearbeitungsstation 7 vorbei. Die Transportrichtung der Beschickungseinrichtung 11 ist durch einen in gleicher Richtung weisenden Pfeil 15 dargestellt. Eine nicht näher dargestellte Abtransporteinrichtung übernimmt die bearbeiteten Gegenstände am Ausgang der Transporteinrichtung 1.

Die voneinander gesondert steuerbaren Antriebe, insbesondere durch gesonderte Schrittmotore gebildete Antriebe der Transporteinrichtung 1 und der Beschickungseinrichtung 11 werden so gesteuert, daß eine Nachbearbeitung unzureichend bearbeiteter Gegenstände möglich ist. Hierzu ist die Transportrichtung der Transporteinrichtung 1 umkehrbar und die Beschickungseinrichtung 11 kann nach Bearbeitung eines der Gegenstände in der Bearbeitungsstation 7 angehalten werden, bevor die Transporteinrichtung 1 mit einem weiteren, zu bearbeitenden Gegenstand beschickt wird. Zur Erläuterung sei angenommen, daß die Prüfeinrichtung 9 während der Bearbeitung des Gegenstands 5b Bearbeitungsmängel feststellt. Die Prüfeinrichtung 9 hält über eine nicht dargestellte Steuerung die Beschickungseinrichtung 11 an, die damit zum Stehen kommt, bevor der nächste Gegenstand 5e, mit dem die Transporteinrichtung 1 beschickt werden soll, auf die Transporteinrichtung übertritt (Fig. 1b). Zugleich wird die Transporteinrichtung 1 sanft abgebremst, die sich hierbei um weniger als den Periodenabstand aufeinanderfolgender Aufnahmen 3 weiterbewegt. Die Transporteinrichtung 1 kommt zum Stehen, bevor der nächste zu bearbeitende Gegenstand 5c die Bearbeitungsstation 7 erreicht. Bei stillstehender Beschickungseinrichtung 11 kehrt die Steuerung die Transportrichtung der Transporteinrichtung 1 um (Pfeil 17 in Fig. 1c), bis der unzureichend bearbeitete Gegenstand 5b erneut die Bearbeitungsstation 7 erreicht hat. Die Steuerung schaltet die ursprüngliche Transportrichtung 13 der Transporteinrichtung 1 ein und startet die Beschickungseinrichtung 11. Zugleich wird der unzureichend bearbeitete Gegenstand 5b nachbearbeitet und nachfolgend der nächste Gegenstand 5c (Fig. 1d).

Fig. 2 zeigt eine Transporteinrichtung 21, hier eine mit Aufnahmen 23 versehene Transportkette, die zu bearbeitende Gegenstände 25 in einer kontinuierlichen Reihe mit gleichförmiger Geschwindigkeit an einer Bearbeitungsstation 27, beispielsweise einer Etikettiereinrichtung zum Aufbringen von Haftetiketten vorbeibewegt. In Bewegungsrichtung 29 der Transporteinrichtung 21 folgt mit Abstand von der Bearbeitungsstation 27 eine Prüfstation 31, die das Bearbeitungsergebnis überprüft. Eine Beschickungseinrichtung 33, hier ebenfalls eine mit Aufnahmen für die Gegenstände versehene Transportkette führt die zu bearbeitenden Gegenstände in Richtung eines Pfeils 35 quer zur Transportrichtung 29 zu. Eine nicht dargestellte Abtransporteinrichtung nimmt die bearbeiteten Gegenstände von der Transporteinrichtung 21 ab.

Eine nicht näher dargestellte Steuerung erlaubt die Nachbearbeitung unzureichend bearbeiteter Gegenstände. Erfaßt die Prüfstation 31 einen unzureichend bearbeiteten Gegenstand, beispielsweise den Gegenstand 25b, so schaltet die Steuerung die Antriebe der Transporteinrichtung 21 und der Beschickungseinrichtung 33 ab, die damit sanft auslaufen, wie dies in Fig. 2b durch gestrichelte Pfeile 37 bzw. 39 angedeutet ist. Gegebenenfalls können auch Steuereinrichtungen vorgesehen sein, die gesteuertes Abbremsen ermöglichen, wie dies bei Schrittmotoren durch kontinuierliche Änderung der Treiberimpulsraten möglich ist. Die Transporteinrichtung 21 kommt zum Stehen, bevor der nächste zu bearbeitende Gegenstand 25d die Bearbeitungsstation 27 erreicht. Die Beschickungseinrichtung 33 kommt zum Stehen, nachdem sie den nächsten auf die Transporteinrichtung 21 zu überführenden Gegenstand 25f in die zugeordnete Aufnahme der Transporteinrichtung 21 eingeführt hat (Fig. 2b).

Die Steuerung kehrt dann bei stillstehender Beschickungseinrichtung 33 die Transportrichtung der Transporteinrichtung 21 um (Pfeil 41 in Fig. 2c) bis der nachzubearbeitende Gegenstand 25b erneut die Bearbeitungsstation 27 erreicht hat. Bei oder nach der darauffolgenden Nachbearbeitung des Gegenstands 21b schaltet die Steuerung die ursprüngliche Transportrichtung 29 der Transporteinrichtung 21 wieder ein, bis der zuletzt von der Beschickungseinrichtung 33 auf die Transporteinrichtung 21 überführte Gegenstand 25f seine Beschickungsposition wieder erreicht hat. Daraufhin wird auch die Beschickungseinrichtung 33 erneut gestartet.

Die Prüfstation 31, die in der Ausführungsform der Fig. 2 in einem dem Bearbeitungstakt entsprechenden Abstand dargestellt ist, kann analog zu Fig. 1 das Bearbeitungsergebnis auch während des Bearbeitungstakts der Bearbeitungsstation überprüfen.

Anstelle der in den Fig. 1 und 2 dargestellten geradlinig bewegenden Transport- bzw. Beschickungseinrichtungen können auch im Kreis bewegende Einrichtungen benutzt werden. Anstelle von Schneckentransporteinrichtungen bzw. Kettentransporteinrichtungen lassen sich auch andere Transportprinzipien einsetzen. Für den Antrieb der Transporteinrichtung als auch der Beschickungseinrichtung werden bevorzugt Schrittmotoren eingesetzt.

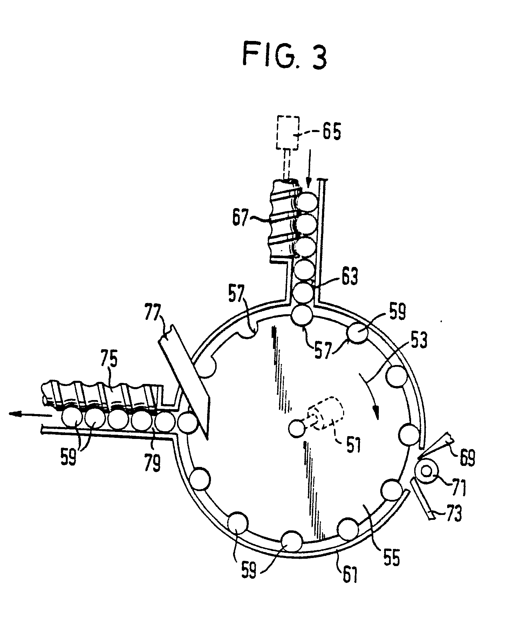

Fig. 3 zeigt Einzelheiten einer nach dem Prinzip der Fig. 2 arbeitenden Etikettiereinrichtung. Ein von einem Schrittmotor 51 um eine vertikale Achse in Richtung eines Pfeils 53 kontinuierlich und mit gleichbleibender Drehzahl angetriebener Teller 55 trägt an seinem Umfang im Abstand voneinander Aufnahmen 57 für zu etikettierende Gegenstände 59. Eine Kreisführung 61 hält die Gegenstände in den Aufnahmen 57. Über einen radialen Einlaufkanal 63 beschickt eine von einem gesonderten Schrittmotor 65 angetriebene Einlaufschnecke 67 die Aufnahmen 57 aufeinanderfolgend mit den Gegenständen 59.

Mit Winkelabstand zum Einlaufkanal 63 bewegt der Teller 55 die Gegenstände 59 an einer Etiketten-Spendestation 69 vorbei, die Haftetiketten auf die Gegenstände 59 abschiebt und mittels einer Massierrolle 71 anmassiert. Eine optische Prüfeinrichtung 73 überprüft, ob die Etiketten-Spendestation 69 ein Etikett aufgebracht hat. Mit Winkelabstand von der Etiketten-Spendestation 69 folgt in Bewegungsrichtung des Tellers 55 eine Auslaufschnecke 75. Ein feststehender, schräg zum Umfang des Tellers 55 nach radial innen ragender Ausweiser 77 lenkt die etikettierten Gegenstände aus den Aufnahmen 57 in einen Einlaufkanal 79 der Auslaufschnecke 75. Die Massierrolle 71 wird über einen Freilauf angetrieben, um der Rückwärtsbewegung folgen zu können.

Eine nicht näher dargestellte Steuerung steuert die Schrittmotoren 51 und 65 in der anhand der Fig. 2 erläuterten Weise, wenn die Prüfeinrichtung 73 einen nicht etikettierten Gegenstand 59 erfaßt. Der Teller 55 wird unter Ausnutzung nahezu des gesamten Umfangsabstands zweier benachbarter Gegenstände sanft abgebremst. Die Einlaufschnecke 67 wird so abgebremst, daß der nächste in ihrem Auslaufkanal 63 sich befindende Gegenstand in die nächste leere Aufnahme 57 eingeführt wird, bevor die Einlaufschnecke 67 zum Stehen kommt. Auch die Einlaufschnecke 67 kann über einen relativ großen Schneckendrehwinkel zum Stehen gebracht werden. Die Rücklaufbewegung und der erneute Transport in Richtung des Pfeils 53 sowie das Einschalten der Einlaufschnecke 67 erfolgt analog zu Fig. 2.

Anstelle der Schrittmotore 61 und/oder 65 können auch andere Elektromotore, beispielsweise Gleichstrommotore mit Permanentmagnetstator oder Scheibenläufermotore benutzt werden, die an einen geschlossenen Drehzahlregelkreis der Steuerung angeschlossen und mit einem die tatsächliche Motordrehzahl überwachenden Tachometer gekuppelt sind.

**Patentansprüche**

1. Einrichtung zum Prüfen und Nachbearbeiten von in einer Bearbeitungsstation (7 ; 27 ; 69) bearbeiteten Gegenständen (5 ; 25 ; 59), mit einer mehrere der Gegenstände (5 ; 25 ; 59) in einer Reihe geordnet und in Aufnahmen (3 ; 23 ; 57) haltend, nacheinander durch die Bearbeitungsstation (7 ; 27 ; 69) bewegenden Transporteinrichtung (1 ; 21 ; 55), einer die Gegenstände (5 ; 25 ; 59) nacheinander einzeln der Transporteinrichtung (1 ; 21 ; 55) zuführenden, steuerbaren Beschickungseinrichtung (11 ; 33 ; 67), einer die Gegenstände (5 ; 25 ; 59) von der Transporteinrichtung (1 ; 21 ; 55) abführenden Abtransporteinrichtung (75), einer Prüfstation (9 ; 31 ; 73) für das Bearbeitungsergebnis der Bearbeitungsstation (7 ; 27 ; 69) und einer Steuerung, die bei Ermittlung eines unzureichend bearbeiteten Gegenstands (5 ; 25 ; 59) die Beschickungseinrichtung (11 ; 33 ; 67) zumindest für die Dauer eines Bearbeitungstakts der Bearbeitungsstation (7 ; 27 ; 69) anhält und den unzureichend bearbeiteten Gegenstand (5 ; 25 ; 59) mittels der Transporteinrichtung (1 ; 21 ; 55) erneut der Bearbeitungsstation (7 ; 27 ; 69) zuführt, dadurch gekennzeichnet, daß die Transporteinrichtung (1 ; 21 ; 55) so ausgebildet ist, daß ihre Transportrichtung umkehrbar ist und sie die Gegenstände (5 ; 25 ; 59) in einer kontinuierlichen, gleichförmigen Bewegung von der Beschickungseinrichtung (11 ; 33 ; 75) über die Bearbeitungsstation (7 ; 27 ; 69) zur Abtransporteinrichtung (75) bewegt, und daß die Steuerung bei Ermittlung eines unzureichend bearbeiteten Gegenstands (5 ; 25 ; 59) die Beschickungseinrichtung (11 ; 33 ; 67) anhält und zugleich oder später die Transporteinrichtung (1 ; 21 ; 55) anhält und deren Transportrichtung umkehrt bis der unzureichend bearbeitete Gegenstand (5 ; 25 ; 59) zumindest die Bearbeitungsstation (7 ; 27 ; 69) erreicht hat, dann die Transportrichtung erneut umkehrt und zugleich oder später die Beschickungseinrichtung (11 ; 33 ; 67) einschaltet.

2. Einrichtung nach Anspruch 1, dadurch gekennzeichnet, daß die Transporteinrichtung (21 ; 55) so ausgebildet ist, daß in Aufnahmen (23 ; 57) der Transporteinrichtung (21 ; 55) sich befindende Gegenstände (25 ; 29) in umgekehrter Transportrichtung am Beschickungsort (63) der Beschickungseinrichtung (33 ; 67) vorbeitransportierbar sind.

3. Einrichtung nach Anspruch 2, dadurch gekennzeichnet, daß die Steuerung nach Ermittlung eines unzureichend bearbeiteten Gegenstands (25 ; 59) die Beschickungseinrichtung (33 ; 67) unmittelbar nach der nächstfolgenden Beschickung der Transporteinrichtung (21 ; 55) mit einem Gegenstand (25 ; 59) stillsetzt.

4. Einrichtung nach Anspruch 1 oder 2, dadurch gekennzeichnet, daß die Prüfstation (9 ; 73) das Bearbeitungsergebnis für jeden Gegenstand (5 ; 59) während der Bearbeitung dieses Gegenstands (5 ; 59) in der Bearbeitungsstation (7 ; 69) überprüft.

5. Einrichtung nach Anspruch 1, dadurch gekennzeichnet, daß die Transporteinrichtung (21 ; 55) für die Transportbewegung von einem elektrischen Schrittmotor (51) angetrieben ist.

6. Einrichtung nach Anspruch 5, dadurch gekennzeichnet, daß die Transporteinrichtung einen von dem Schrittmotor (51) um eine vertikale Achse drehbaren Teller (55) mit mehreren am Umfang versetzten Aufnahmen (57) für die Gegenstände (59) aufweist und daß ein feststehender Ausweiser (77) die Gegenstände aus den Aufnahmen (57) auf die Abtransporteinrichtung (75) überführt.

7. Einrichtung nach Anspruch 1, dadurch gekennzeichnet, daß die Beschickungseinrichtung (33 ; 67) unabhängig vom Antrieb der Transporteinrichtung (21 ; 55) durch einen Elektromotor (65) angetrieben ist.

8. Einrichtung nach Anspruch 7, dadurch gekennzeichnet, daß die Beschickungseinrichtung als von dem Elektromotor (65) angetriebene Transportschnecke ausgebildet ist.

9. Einrichtung nach Anspruch 7, dadurch gekennzeichnet, daß der Elektromotor als Schrittmotor (65) ausgebildet ist.

10. Einrichtung nach Anspruch 7, dadurch gekennzeichnet, daß der Elektromotor an einen Drehzahlregelkreis angeschlossen ist.

11. Einrichtung nach einem der vorangegangenen Ansprüche, dadurch gekennzeichnet, daß die Bearbeitungsstation als Etikettiervorrichtung (69) ausgebildet ist.

## Claims

1. Apparatus for examining and reworking articles (5 ; 25 ; 29) worked in a vorking station (7 ; 27 ; 69), having a transport device (1 ; 21 ; 55) which moves several of the articles (5 ; 25 ; 59), arranged in a row and held in sockets (3 ; 23 ; 57), successively through the working station (7 ; 27 ; 69), a controllable charging apparatus (11 ; 33 ; 67) which feeds the articles (5 ; 25 ; 59) singly in succession to the transport device (1 ; 21 ; 55), a removing device (75) which conducts the articles (5 ; 25 ; 59) away from the transport device (1 ; 21 ; 55), a testing station (9 ; 31 ; 73) for the working result of the working station (7 ; 27 ; 69) and a control system which on ascertaining an inadequately worked article (5 ; 25 ; 59) halts the charging apparatus (11 ; 33 ; 67) at least for the duration of a working cadence of the working station (7 ; 27 ; 69) and feeds the inadequately worked article (5 ; 25 ; 59) by means of the transport device (1 ; 21 ; 55) afresh to the working station (7 ; 27 ; 69), characterised in that the transport device (1 ; 21 ; 55) is so formed that its transport direction is reversible and it moves the articles (5 ; 25 ; 59) in a continuous, uniform movement from the charging apparatus (11 ; 33 ; 75) by way of the working station (7 ; 27 ; 69) to the removing device (75), and in that the control system on ascertaining an inadequately worked article (5 ; 25 ; 59) halts the charging apparatus (11 ; 33 ; 67) and at the same time or later halts the transport device (1 ; 21 ; 55) and reverses its direction of transport until the inadequately worked article (5 ; 25 ; 59) hat at least reached the working station (7 ; 27 ; 69), then reverses the transport direction afresh and at the same tine or later switches on the charging apparatus (11 ; 33 ; 69).

2. Apparatus according to Claim 1, characterised in that the transport device (21 ; 55) is formed so that articles (25 ; 29) situated in sockets (23 ; 57) of the transport device (21 ; 55) are transportable in the opposite transport direction past the charging point (63) of the charging apparatus (33 ; 67).

3. Apparatus according to Claim 2, characterised in that the control system, after ascertaining an inadequately worked article (25 ; 59), halts the charging apparatus (33 ; 67) immediately after the next succeeding charging of the transport device (21 ; 55) with an article (25 ; 59).

4. Apparatus according to Claim 1 or 2, characterised in that the testing station (9 ; 73) examines the working result for each article (5 ; 59) during the working of this article (5 ; 59) in the working station (7 ; 69).

5. Apparatus according to Claim 1, characterised in that the transport device (21 ; 55) is driven by an electric stepping motor (51) for the transport movement.

6. Apparatus according to Claim 5, characterised in that the transport device comprises a dish (55) rotatable by the stepping motor (51) about a vertical axis with a plurality of sockets (57) staggered on the circumference for the articles (59) and in that a stationary expeller (77) transfers the articles out of the sockets (57) on to the removing device (75).

7. Apparatus according to Claim 1, characterised in that the charging apparatus (33 ; 67) is driven by an electric motor (65) independently of the drive of the transport device (21 ; 55).

8. Apparatus according to Claim 7, characterised in that the charging apparatus is formed as a conveyor worm driven by the electric motor (65).

9. Apparatus according to Claim 7, characterised in that the electric motor is formed as a stepping motor (65).

10. Apparatus according to Claim 7, characterised in that the electric motor is connected to a rotation rate regulating circuit.

11. Apparatus according to one of the preceding Claims, characterised in that the working station is formed as a labelling apparatus (69).

## Revendications

1. Dispositif d'examen et de post-traitement d'objets (5 ; 25 ; 59) traités dans une station de traitement (7 ; 27 ; 69), comportant un dispositif de transport (1 ; 21 ; 55) faisant passer successivement par la station de traitement (7 ; 27 ; 69) plusieurs des objets (5 ; 25 ; 59), rangés dans un certain ordre et maintenus dans des logements (3 ; 23 ; 57), un dispositif de chargement (11 ; 33 ; 67) commandé, amenant les objets (5 ; 25 ; 59), successivement individuellement au dispositif de transport (1 ; 21 ; 55), un dispositif d'évacuation (75) évacuant les objets (5 ; 25 ; 59) du dispositif de transport (1 ; 21 ; 55), une station (9 ; 31 ; 73) de contrôle du résultat du traitement de la station de traitement (7 ; 27 ; 69) et un ensemble de commande qui, en cas de détection d'un objet (5 ; 25 ; 59) insuffisamment traité, arrête le dispositif de chargement (11 ; 33 ; 67) au moins pendant la durée d'un cycle de traitement de la station de traitement (7 ; 27 ; 69) et ramène l'objet (5 ; 25 ; 59) insuffisamment traité à la station de traitement (7 ; 27 ; 69) au moyen du dispositif de transport (1 ; 21 ; 55), caractérisé en ce que le dispositif de transport (1 ; 21 ; 55) est conformé de façon que son sens de transport puisse être inversé et de façon à amener les objets (5 ; 25 ; 59), au cours d'un mouvement continu et uniforme, du dispositif de chargement (11 ; 33 ; 67) au dispositif d'évacuation (75) en les faisant passer par la station de traitement (7 ; 27 ; 69), et en ce que l'ensemble de commande arrête le dispositif de chargement (11 ; 33 ; 67) en cas de détection d'un objet (5 ; 25 ; 59) insuffisamment traité et arrête en même temps ou ultérieurement le dispositif de transport (1 ; 21 ; 55) et inverse son sens de transport jusqu'à ce que l'objet (5 ; 25 ; 59) insuffisamment traité soit au moins parvenu à la station de traitement (7 ; 27 ; 69), puis inverse de nouveau le sens de transport et met en marche le dispositif de chargement (11 ; 33 ; 69) en même temps ou ultérieurement.

2. Dispositif selon la revendication 1, caractérisé en ce que le dispositif de transport (21 ; 55) est conformé de façon que des objets (25 ; 59), se trouvant dans des logements (23 ; 57) du dispositif de transport (21 ; 55) soient transportés en passant devant l'emplacement de chargement (63) du dispositif de chargement (33 ; 67) dans le sens de transport inverse.

3. Dispositif selon la revendication 2, caractérisé en ce qu'après la détection d'un objet (25 ; 59) insuffisamment traité, l'ensemble de commande arrête le dispositif de chargement (33 ; 67) immédiatement après le chargement suivant du dispositif de transport (21 ; 55) par un objet (25 ; 59).

4. Dispositif selon la revendication 1 ou 2, caractérisé en ce que la station de contrôle (9 ; 73) contrôle le résultat du traitement pour chaque objet (5 ; 59) pendant le traitement de cet objet (5 ; 59) dans la station de traitement (7 ; 69).

5. Dispositif selon la revendication 1, caractérisé en ce que le dispositif de transport (21 ; 55) est entraîné par un moteur électrique pas à pas (51) pour effectuer le mouvement de transport.

6. Dispositif selon la revendication 5, caractérisé en ce que le dispositif de transport comporte un plateau (55) pouvant tourner autour d'un axe vertical sous l'action du moteur pas à pas (51), comportant plusieurs logements (57) décalés sur la périphérie pour les objets (59), et en ce qu'un organe d'expulsion fixe (77) transfère les objets des logements (57) au dispositif d'évacuation (75).

7. Dispositif selon la revendication 1, caractérisé en ce que le dispositif de chargement (33 ; 67) est entraîné par un moteur électrique (65), indépendamment de l'entraînement du dispositif de transport (21 ; 55).

8. Dispositif selon la revendication 7, caractérisé en ce que le dispositif de chargement est réalisé sous la forme d'une hélice transporteuse entraînée par le moteur électrique (65).

9. Dispositif selon la revendication 7, caractérisé en ce que le moteur électrique est réalisé sous la forme d'un moteur pas à pas (65).

10. Dispositif selon la revendication 7, caractérisé en ce que le moteur électrique est relié à un circuit de réglage de la vitesse de rotation.

11. Dispositif selon l'une des revendications précédentes, caractérisé en ce que la station de traitement est réalisée sous la forme d'un dispositif d'étiquetage (69).

# FIG. 1

a.)

b.)

c.)

d.)

# FIG. 2

a.)

b.)

c.)

d.)

# FIG. 3